# EUROPÄISCHE PATENTSCHRIFT

(11) **EP 1 978 888 B1**
(45) Veröffentlichungstag und Bekanntmachung des Hinweises auf die Patenterteilung: **08.07.2009**
(21) Anmeldenummer: 07718488.5
(22) Anmeldetag: 08.06.2007
(51) Int. Cl.: A61C 13/00, B23Q 35/20, B44B 3/04

(54) **KOPIERFRÄSGERÄT**
COPY MILLING DEVICE
FRAISEUSE À COPIER

(30) Priorität: 13.06.2006 DE 102006027395
(43) Veröffentlichungstag der Anmeldung: 15.10.2008
(73) Patentinhaber: Amann Girrbach AG, 6842 Koblach (AT)
(72) Erfinder: AMANN, Jürgen, 6842 Koblach (AT)
(74) Vertreter: Hofmann, Ralf U.
(86) Internationale Anmeldenummer: PCT/AT2007/000277
(87) Internationale Veröffentlichungsnummer: WO 2007/143764

(56) Entgegenhaltungen:
- EP-A- 0 384 908
- WO-A-87/07858
- US-A- 2 551 953
- US-A- 3 100 344
- US-A- 4 141 145

## Beschreibung

Die Erfindung betrifft ein Kopierfräsgerät zur Bearbeitung von Werkstücken aus keramischen Werkstoffen, wobei eine Tastereinheit einem abzutastenden Modell und eine Fräsereinheit dem zu bearbeitenden Werkstück zugeordnet sind, und wobei Tastereinheit und Fräsereinheit nach Art eines Pantographen miteinander in Wirkverbindung stehen.

Mit einem solchen Kopierfräsgerät sollen keramische Werkstoffe, z.B. Hochleistungskeramiken, wie Al₂O₃ und ZrO₂ welche für Kronen, Brücken od.dgl. in der Dentaltechnik oder z.B. in der Schmuckindustrie oder auch für andere Geometrien gefertigt werden, bearbeitet werden. Gerade bei der Bearbeitung von Weißlingen oder Grünligen ist zu beachten, dass der Werkstoff nach der Bearbeitung bzw. Formgebung einem Sintervorgang unterworfen wird, um seine Endfestigkeit zu erreichen. Bei einem solchen Sintervorgang schwindet der Werkstoff bis maximal an seine theoretische Enddichte, was z.B. bei Zirkoniumdioxid eine Dimensionsänderung (Schrumpfung) von ca. 20% bedeutet. Dies bedeutet, dass z.B. ein Gerüst bei der Fertigung im keramischen Grünling oder Weißling ca. 25% vergrößert gefertigt werden muss, um diese Schrumpfung zu kompensieren.

Bekannt ist, dass bei der Herstellung von keramischen Rohlingen - selbst bei identischer Prozessfolge und identischen Prozessparametern - fertigungsbedingte Chargenunterschiede des Schwindungsfaktors im Bereich von ± 1% nicht zu vermeiden sind. Dies bedeutet, dass diese chargenabhängigen Schwindungsfaktoren bei der Fertigung der Gerüste zu berücksichtigen sind, um die gewünschten Enddimensionen nach dem Sintervorgang zu erreichen.

Bei CAD/CAM-Systemen wird der chargenabhängige Schwindungsfaktor als Vergrößerungsfaktor in der CAD-Software berücksichtigt, d.h. das konstruierte Ausgangsmodell wird um diesen Faktor vergrößert. Bei manchen Systemen wird der Faktor sogar mittels Barcodesystem aufgedruckt, eingelesen und von der Software verarbeitet. Ein handbetriebenes Kopierfräsgerät, welches einem einstellbaren Vergrößerungsfaktor hat, ist aus EP 0384908 bekannt. Bei diesem Pantographen ist der Bewegungradins nicht verstellbar, und die Arbeitsplatte ist nicht arelbar. Die vorliegende Erfindung hat sich nun zur Aufgabe gestellt, optimale Möglichkeiten mit einem Kopierfräsgerät unter Einsatz eines Pantographensystems zu schaffen, wobei ein variabler Vergrößerungsfaktor einstellbar ist und eine hohe Übertragungsgenauigkeit erzielt werden kann.

Erfindungsgemäß gelingt dies dadurch, dass die den Pantographen bildenden Arme und Hebel zur Veränderung des Verkleinerungs- oder Vergrößerungsfaktors zumindest teilsweise in ihrer Länge und der Bewegungsradius des Pantographen verstellbar sind, dass an den gleich gerichteten Enden von zwei annähernd parallel zueinander ausgerichteten Armen des Pantographen einerseits die Tastereinheit und andererseits die Fräseinheit angeordnet sind und dass eine Arbeitsplatte zur Aufnahme des Modells und des zu bearbeitenden Werkstückes verdrehbar gehalten ist.

Dadurch ist eine individuelle Steuerung der Passung der Kronen- und Brückengerüste in der Dentaltechnik möglich geworden, wobei der variable Vergrößerungsfaktor diese Möglichkeit geschaffen hat. Diese Eigenschaft ist aus der Gusstechnik als Expansionssteuerung mittels Einbettmassenvariation bekannt, d.h., dass eine Krone auf einem gegebenen Zahnstumpf weiter oder enger gefertigt werden kann. Der variable Vergrößerungsfaktor bietet einerseits die Möglichkeit, chargenabhängige Unterschiede im Schwindungsverhalten der Keramikwerkstoffe auszugleichen und andererseits kann eine individuelle Passgenauigkeit z.B. für Kronen eingestellt werden (Expansionssteuerung). Infolge der Drehbarkeit der Arbeitsplatte kann in einfacher Weise beim Modell die Ober- und die Unterseite abgetastet werden. So können auch Hinterschnitte abgebildet und natürlich auch in das Werkstück gefräst werden.

Durch die Erfindung ist es möglich geworden, eine besonders hohe Dimensionstreue durch eine hohe Übertragungsgenauigkeit zu gewährleisten, so dass auch die Forderung nach sehr geringen Fertigungstoleranzen (Größenordnung ± 10 µm) erreicht ist. Die Tastereinheit und die Fräsereinheit sind also direkt den Enden der Arme zugeordnet und liegen daher nicht wie sonst bei Pantographen üblich, im Bereich einer Drehachse zwischen den Armen und Hebeln.

Eine konstruktiv einfache, jedoch besonders wirksame Ausgestaltung sieht dabei vor, dass ein Abschnitt des die Fräseinheit tragenden Armes verlängerbar oder verkürzbar ist. Es kann hier also auf einfachem, mechanischem Wege der Vergrößerungsfaktor verstellt werden.

In diesem Zusammenhang ist es vorteilhaft, wenn der verstellbare Abschnitt des die Fräseinheit tragenden Armes gegenüber dem Arm feststellbar ist. Dabei liegt eine einfache konstruktive Gestaltung darin, dass der verstellbare Abschnitt des die Fräseinheit tragenden Armes ein Langloch aufweist, in welches eine in den Arm eindrehbare Klemmschraube eingreift.

Eine besonders vorteilhafte Ausgestaltung sieht vor, dass der aus Armen und Hebeln bestehende Pantograph zur Einstellung des Bewegungsradius gegenüber einem Pantographenarm verstellbar ausgeführt ist. Dadurch ist eine Änderung des Bewegungsradius möglich geworden, ohne dass sich die Winkel der Arme und Hebel des Pantographen selbst zueinander ändern.

Eine weitere besondere Ausgestaltung sieht vor, dass der Pantographenarm als Halterung für den Pantographen ausgeführt ist, welcher an einer in einem vorbestimmten Radius verlaufenden Führungsschiene befestigt ist. Mit einer solchen Ausgestaltung kann die Konstruktionsgröße bei einem Pantographenprinzip trotz der Wirksamkeit eines großen Radius in einer kleinen Baugröße gehalten werden. Dies ist insbesondere dann von besonderer Bedeutung, wenn das Kopierfräsgerät in einem Dentallabor oder in sonstigen eher kleinen Versuchslabors eingesetzt werden soll. Der lange Pantographenarm kann dadurch weggelassen werden, da die Halterung für den Pantographen auf einem gleichen Radius mit der Führungsschiene verschoben werden kann. Der Einsatz einer Führungsschiene ermöglicht es, die Abmessungen des Kopierfräsgerätes zu halbieren. Der für die Vergrößerung notwendige Führungsradius von ca. 600 bis 800 mm ist vorgegeben. Durch den Einsatz der Führungsschiene wird die Abmessung des Kopierfräsgerätes wesentlich verringert. Dabei ist bei einer speziellen Auslegung der Führungsschiene ein reibungsarmes Handling ohne Rückstell, und Schwungmomente möglich.

Eine konstruktiv einfache Lösung sieht dabei vor, dass die Führungsschiene entlang von zwei oder mehreren Rollenpaaren oder wenigstens drei versetzt zueinander angeordneten Rollen gebildeten Führungselementen verschiebbar geführt ist. Es ist also eine Art Radiusbahn geschaffen, die der Bewegung eines sonst üblichen Pantographenarmes um dessen Drehpunkt nachgebildet ist.

Dabei ist aber trotzdem eine Änderung des Radius auf einfach Weise möglich, ohne dass dabei die Winkel der Arme und Hebel des Pantographen verändert werden. Dies wird ermöglicht, indem die Halterung des Pantographen quer zur Längserstreckung der Führungsschiene verstellbar gehalten ist. Es ist also auf einfache Weise möglich geworden, den Radius der Bewegung des Pantographen zu verstellen

Eine Ausführungsvariante sieht vor, dass einer der die Fräseinheit und die Tastereinheit tragenden Arme verbindenden Hebel fest und unverschiebbar mit der Halterung verbunden ist und die Halterung gegenüber der Führungsschiene verstellbar gehalten ist. Es ist damit eine feste und vor allem besonders präzise Verbindung des Pantographen mit der Führungsschiene gewährleistet.

Weiter wird vorgeschlagen, dass die Arbeitsplatte zwei Aufnahmebereiche für mittels einer Klemmbefestigung fixierbare Spannrahmen aufweist, an welchen einerseits das abzutastende Modell und andererseits das zu bearbeitende Werkstück festlegbar sind. Dadurch ist eine einfache, jedoch genaue und sichere Befestigung des Modells und des Werkstückes ermöglicht worden.

In diesem Zusammenhang ist es besonders vorteilhaft, wenn die Spannrahmen und die diese aufnehmenden Öffnungen in der Arbeitsplatte kreisförmig ausgeführt sind, so dass die Spannrahmen in deren Ebene bei gelöster Klemmbefestigung um bis zu 360° verdrehbar sind. Es ist dadurch eine exakte Befestigung des Modells und des Werkstückes möglich.

Gerade die Bearbeitung von keramischen Werkstoffen, und hier insbesondere Weißlinge oder Grünlinge, ist mit einer starken Staubentwicklung verbunden, der man bisher trotz Absauganlagen kaum Herr geworden ist. Die vorliegende Erfindung schlägt dazu vor, dass die Arbeitsplatte zumindest im Aufnahmebereich des zu bearbeitenden Werkstückes oder eben im Bereich des die Werkstücke aufnehmenden Spannrahmens Durchtrittsöffnungen aufweist und dass unterhalb der Arbeitsplatte eine Absaugeinrichtung angeordnet ist. Es kann somit unmittelbar an dem den Staub bildenden Bereich eine Absaugung erfolgen und vor allem nach unten hin, so dass die Beobachtung des Werkstückes selbst in keiner Weise behindert ist.

Damit eine sichere und einfache Drehung der Arbeitsplatte möglich ist, wird vorgeschlagen, dass die Arbeitsplatte im Bereich zwischen den beiden Spannrahmen an einem Lagerbock angeordnet ist, um dessen horizontale Achse die Arbeitsplatte um bis zu 360° verdrehbar ist. Es ist daher auch ein sicherer Gleichlauf der beiden Spannrahmen gewährleistet.

Dabei ist es vorteilhaft, wenn die Arbeitsplatte in jeder Winkeleinstellung gegenüber dem Lagerbock feststellbar ist. Es ist damit eine Anpassung insbesondere bei komplizierten Hinterschneidungen am Modell möglich, um dann eine exakte Übertragung auf das zu bearbeitende Werkstück zu erzielen.

Eine konstruktive Maßnahme sieht dabei vor, dass die beiden Aufnahmebereiche der Arbeitsplatte über einen Lagerbolzen miteinander fest verbunden sind, welcher im Lagerbock gehalten ist. Es ist daher auch von der Steifigkeit her gesehen, eine optimale Lösung geschaffen worden.

Weitere erfindungsgemäße Maßnahmen und besondere Vorteile werden in der nachstehenden Beschreibung anhand der Zeichnungen noch näher erläutert: Es zeigen:
- Fig. 1: eine Schrägsicht eines erfindungsgemäßen Kopierfräsgerätes ;
- Fig. 2: eine Draufsicht auf das Kopierfräsgerät, wobei Teile von Abdeckteilen angenommen sind, um eine Führungsschiene sichtbar zu machen;

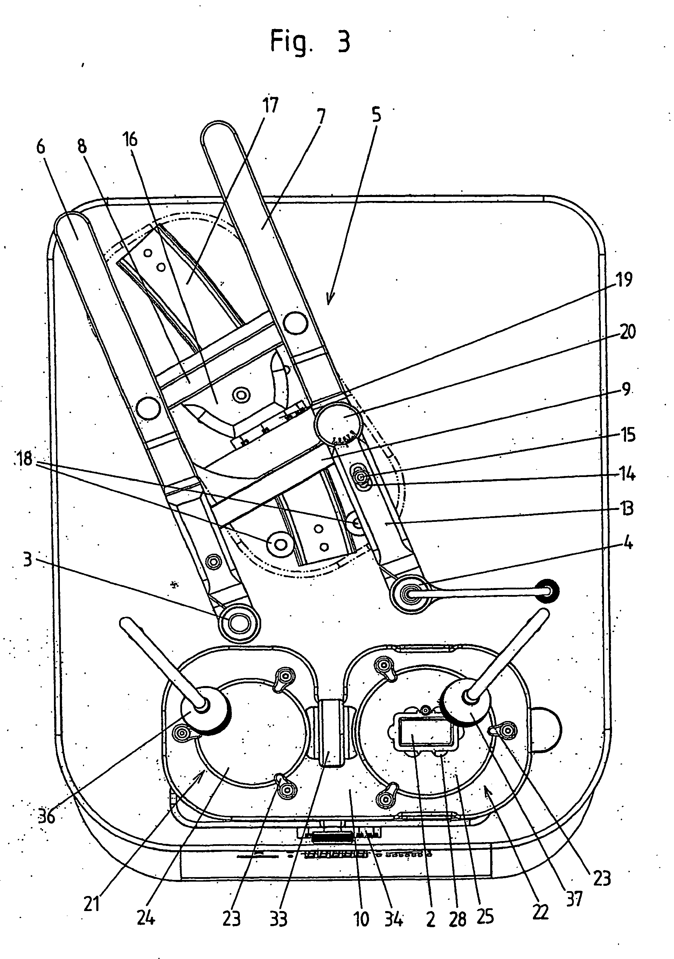

- Fig. 3: eine gleiche Draufsicht wie Fig.2, wobei der Pantograph zurückgeschoben dargestellt ist;

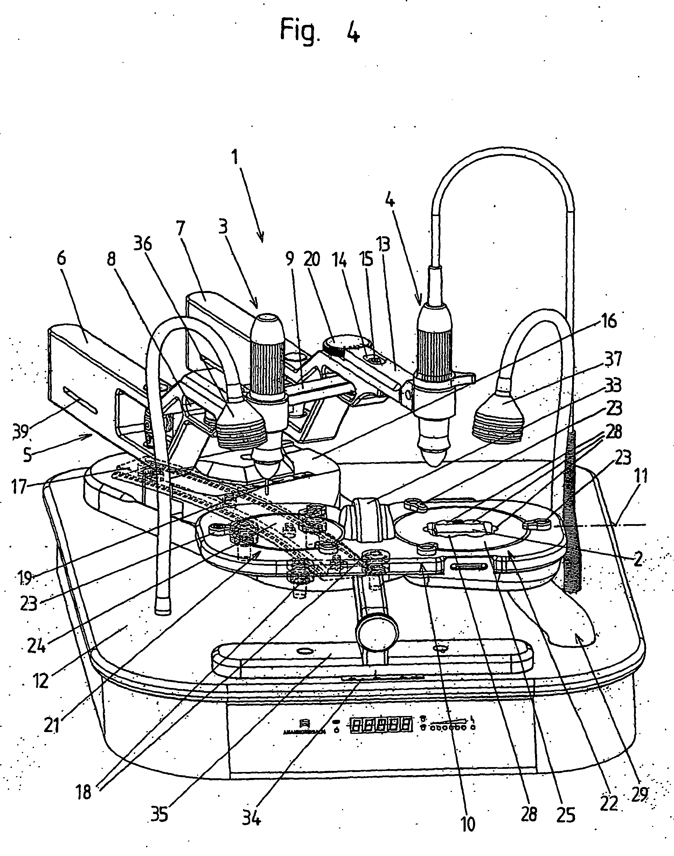

- Fig. 4: eine Schrägsicht ähnlich der Fig1, wobei jedoch zusätzliche Elemente mit dargestellt sind;

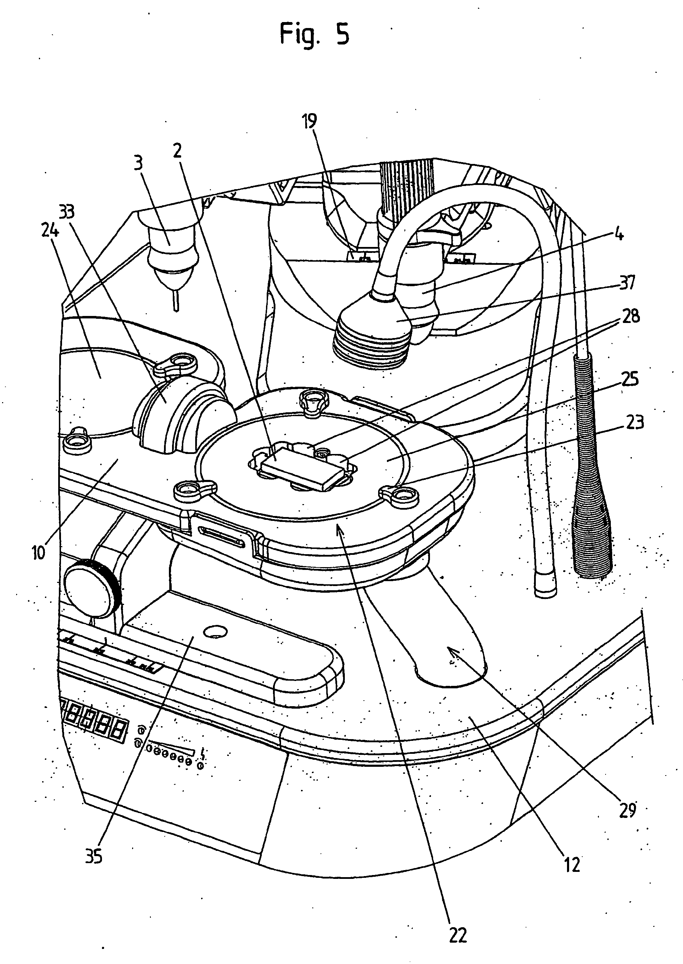

- Fig. 5: eine Teilschrägsicht des Kopierfräsgerätes, wobei insbesondere das zu bearbeitende Werkstück tragende Abschnitt der Arbeitsplatte ersichtlich ist.

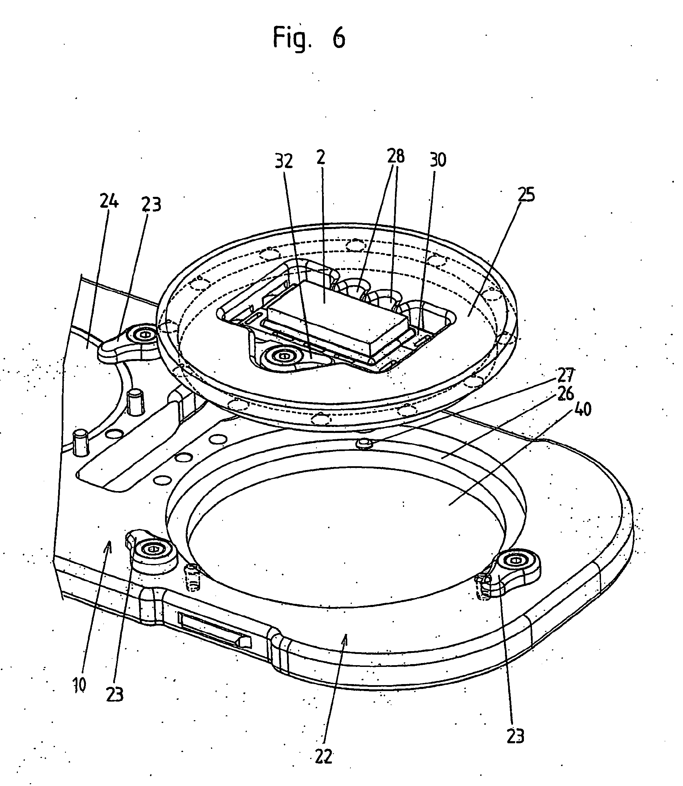

- Fig. 6: eine Schrägsicht eines Abschnittes der Arbeitsplatte mit abgehobenem Spannrahmen zur Halterung des zu bearbeitenden Werkstückes;
- Fig. 7: eine Ansicht eines Ausführungsbeispieles des Kopierfräsgerätes, bei welchem noch ein Pantographenarm im Einsatz ist.

Das in den Zeichnungen dargestellte Kopierfräsgerät 1 dient zur Bearbeitung von Werkstücken 2 aus keramischen Werkstoffen, wobei eine Tastereinheit 3 einem abzutastenden Modell und eine Fräsereinheit 4 dem zu bearbeitenden Werkstück 2 zugeordnet sind. Tastereinheit 3 und Fräsereinheit 4 stehen nach Art eines Pantographen 5 miteinander in Wirkverbindung.

Der Pantograph 5 besteht in dieser Form aus zwei Armen 6,7 und zwei Hebeln 8,9, welche so verbunden sind, dass das so gebildete, veränderliche Viereck ein Parallelogramm darstellt. Im unteren Loch des linken Schenkels wird der Pantograph auf der Zeichenunterlage befestigt. Bei den bekannten Pantographen befindet sind In der Gelenkverbindung zweier kurzer Stäbe (Arme und Hebel) ein Zeichenstift. Schließlich ist im Bereich der anderen Gelenkverbindung ein Fahrstift vorgesehen. Unter den Zeichenstift wird ein leeres Blatt Papier gelegt und unter den Fahrstift die Vorlage. Zum Zeichnen bewegt man den Fahrstift entlang der Konturen der Vorlage. Da der Zeichenstift der Bewegung des Fahrstiftes genau folgt, entsteht gleichzeitig auf dem Zeichenblatt eine beispielsweise im Verhältnis von 2:1 verkleinerte Kopie der Vorlage. Soll eine Verkleinerung in einem anderen Verhältnis entstehen, so bleibt die Position des Fahrstiftes unverändert; für Befestigungs- und Zeichenstift sind dem gewünschten Maßstab entsprechende Löcher zu wählen. Dabei müssen alle drei Stifte stets auf einer Geraden liegen. Mit der Vertauschung von Zeichen- und Fahrstift wechselt man vom Verkleinern zum Vergrößern. Eine gleich große Kopie wird erzeugt, wenn Fahr- und Zeichenstift an den Enden der beiden äußeren Schenkel und der Befestigungsstift im Gelenk der beiden kurzen Stäbe befestigt werden. Die Kopie entsteht dabei im Vergleich zur Vorlage um 180° gedreht. Ein Kopierfaktor von 1:1 ist systembedingt nur mit speziell darauf abgestimmten Schenkelkonstruktionen möglich. Früher wurden die Pantographen in der Kartografie und Geodäsie zur Verkleinerung und Vergrößerung von Karten und Plänen benutzt. Heute, in der Zeit von CAD und digitaler Bildbearbeitung, spielt der Pantograph keine große Rolle mehr, jedoch beim Kopierfräsen spielen Pantographen eine große Rolle. Sie ermöglichen durch stufenlose Verstellmöglichkeit der Position der Gelenkwinkel bzw. der Stiftaufnehmer jeden beliebigen Verkleinerungs- bzw. Vergrößerungsmaßstab. Die Führung mittels Pantographen bewirkt Bewegungen in alle drei Raumachsen. Es lässt sich also neben der Bearbeitungsposition auch die Bearbeitungstiefe bzw. das Abheben des Fräsers vom Werkzeug mitbestimmen. Die Führung geschieht meist manuell durch den Bediener.

Bei der vorliegenden Erfindung sind nun die den Pantographen bildenden Arme 6,7 und Hebel 8,9 zur Veränderung des Verkleinerungs- oder Vergrößerungsfaktors zumindest teilweise in ihrer Länge verstellbar und der Bewegungsradius des Pantographen 5 ist ebenfalls einstellbar. Weiters ist eine Arbeitsplatte 10 zur Aufnahme des Modells und des zu bearbeitenden Werkstückes 2 um bis zu 360° um eine horizontale Achse 11 verdrehbaren gehalten.

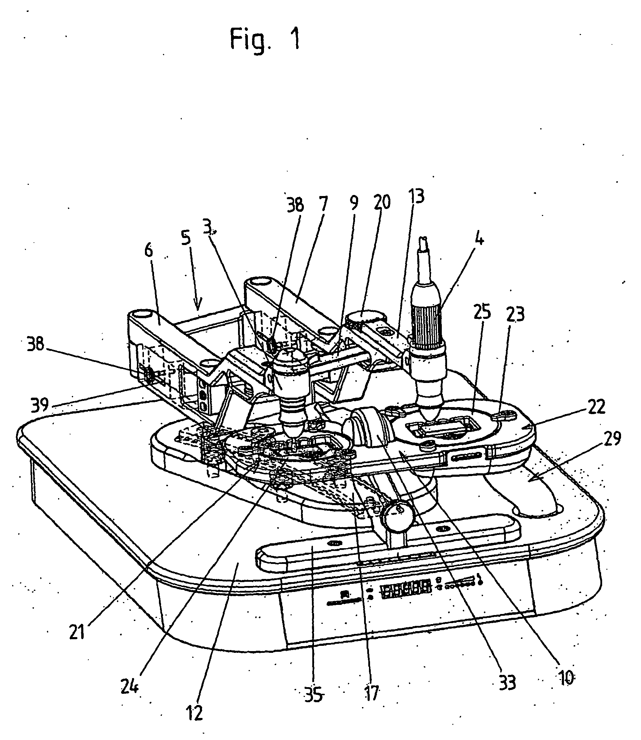

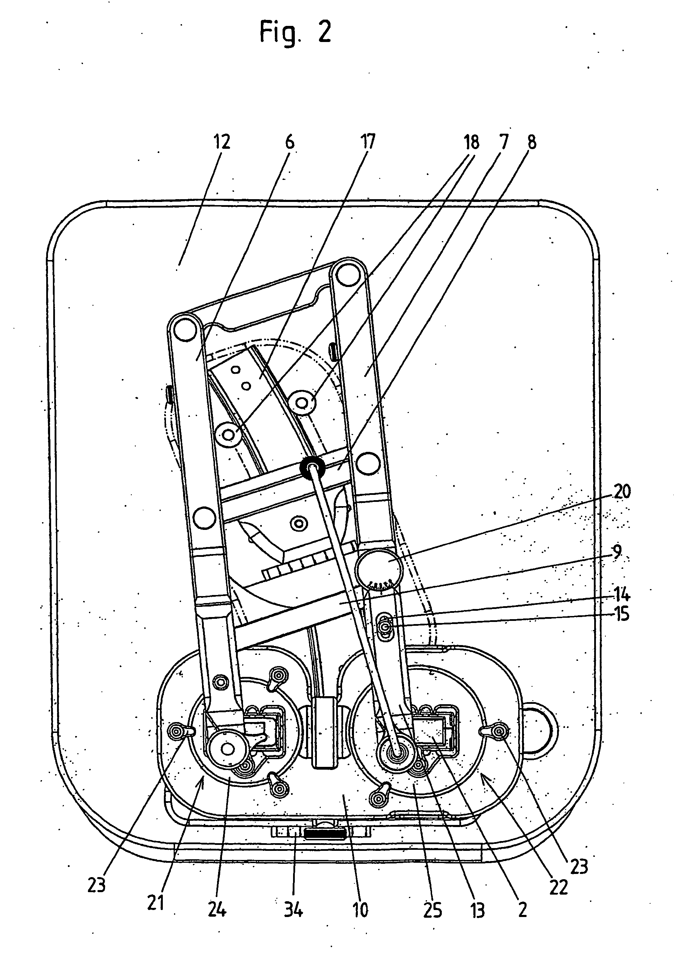

An den gleich gerichteten Enden der zwei annähernd parallel ausgerichteten Arme 6,7 des Pantographen 5 sind einerseits die Tastereinheit 3 und andererseits die Fräsereinheit 4 angeordnet. Sowohl die Tastereinheit 3 als auch die Fräsereinheit 4 liegen also außerhalb der Verbindungsachsen von Armen 6,7 und Hebeln 8,9. Der in den Fig.1 und 2 parallel zum Hebel 8 am freien, rückwärtigen Ende der Arme 6, 7 angeordnete Hebel kann auch alternativ die Funktion des Hebels 8 übernehmen oder aber zusätzlich vorhanden sein und damit einen Teil des Pantographen 5 bilden.

Bedingt durch Chargenunterschiede bei der Herstellung von Zirkoniumdioxidrohlingen spielt ein variabel einstellbarer Vergrößerungsfaktor am Kopierfräsgerät eine wichtige Rolle, da Chargenunterschiede gleichbedeutend mit unterschiedlichen Schrumpfmaßen während des Sintervorgangs sind.

Angelehnt an bereits bestehende Kopierschleif- und Frässysteme, sieht die vorliegende Erfindung nun ein Kopierfräsgerät vor, welches wesentliche technische Neuerungen beinhaltet, eine sehr gute Wirtschaftlichkeit, einfaches Handling und neues Design sowie eine breitere Verarbeitungspalette bezüglich des Verarbeitungswerkstoffs Zirkoniumdioxid mit sich bringt.

Der Pantograph ist das Herzstück des Kopierfräsgerätes. Er ermöglicht durch stufenlose Verstellmöglichkeit der Position der Gelenkwinkel bzw. der Aufnahme der Fräsereinheit 4 einen Vergrößerungsmaßstab von z.B. 20% bis 30%, vorzugsweise 23% bis 26% in 0.5er-Schritten oder auch komplett stufenlos. Die Führung mittels Pantographen bewirkt dabei eine Bewegung in allen drei Raumachsen. Es lässt sich also neben der Bearbeitungsposition auch die Bearbeitungstiefe bzw. das Abheben des Fräsers vom Werkzeug mitbestimmen.

Eine Grundplatte 12 wird zweckmäßigerweise aus einer rostfreien Edelstahlplatte oder aus Aluminium gebildet und trägt sämtliche Einzelteile des Kopierfräsgerätes 1. Ihre Abmaße sind im Detailfall zu definieren, doch sie sollte so klein wie möglich sein, um möglichst Platz sparend in einem Labor untergebracht werden zu können.

Um eine optimale Vergrößerung oder Verkleinerung zu erzielen, ist eine vorteilhafte Ausgestaltung darin zu sehen, dass ein Abschnitt 13 des die Fräseinheit 4 tragenden Armes 7 verlängerbar oder verkürzbar ist. Dies kann in einfacher Weise so erfolgen, indem der verstellbare Abschnitt 13 des die Fräseinheit 4 tragenden Armes 7 gegenüber dem Arm 7 feststellbar ist. Dazu kann der verstellbare Abschnitt 13 ein Langloch 14 aufweisen, in welches eine in den Arm 7 eindrehbare Klemmschraube 15 eingreift. Um eine exakte Verstellung und damit Neueinstellung vornehmen zu können, ist auf dem Arm 7 eine mit einer Maßeinteilung versehene Verstelleinrichtung 19 vorhanden.

Die in die Fräsereinheit 4 einzusetzenden Fräser und auch die mit der Tastereinheit 3 zusammenwirkenden Taster bestehen zweckmäßig aus rostfreiem Hartmetall und existieren immer als Paar in den jeweiligen verschiedenen Durchmessern. Vorteilhaften Abmessungen der Fräser von 1.00, 2.00, 3.00 und 3.90 mm stehen Abmessungen der Taster mit Durchmessern von 0.80, 1,60, 2,40 und 3,20 mm gegenüber. Dadurch ist dem Vergrößerungsfaktor entsprechend Rechnung getragen.

Der Taster hat die Funktion des Abtastens des Modells, beispielsweise einer Kunststoffmodellation. Das heißt, dass mit dem Taststift langsam an der kompletten Modellation entlanggefahren wird und parallel dazu fräst der Fräser diese Bewegungsform des Tasters in den Zirkoniumdioxidrohling. Es wird die vergrößerte Modellationsform wiedergegeben.

Besonders wichtig ist die richtige Einstellung des Armes 7 für die Fräsereinheit. Die richtige Einstellung ist gewährleistet, wenn nach einer Auf- oder Abwärtsbewegung des Armes 7 die Drehachse des Pantographenarmes, der Abtastpunkt und der Fräseransatzpunkt wieder gemeinsam auf einer Nulllinie liegen. Die Auf- oder Abwärtsbewegung symbolisiert in diesem Fall die prozentuale Vergrößerung des Fräsobjektes. Um eine Vergrößerung eines Objektes zu erhalten, darf der Fräsarm 7 niemals gleichlang oder kürzer als der Tastarm 6 sein. Verlängert man den Fräsarm (>23%) kommt es zur Verschiebung des Abtastpunktes und des Fräseransatzpunktes, sie befinden sich nicht mehr auf der Nulllinie. Um ein Gleichgewicht des Systems wiederherzustellen, muss der Pantograph 5 entlang des Pantographenarmes verschoben werden. Dadurch senkt sich der Pantographenarm ab und die genannten Punkte befinden sich mit der Drehachse des Pantographen 5 wieder auf der Nulllinie. Die Punkte werden bei diesem Vorgang auf der Nulllinie nach rechts verschoben. Auf Grund dessen muss die Arbeitsplatte ebenfalls nach rechts verschoben werden, da sonst die Aufnahme des Modells und des Werkstückes 2 nicht mittig zum Fräsarm 7 und Tastarm 6 liegen würden. Findet nur eine Ausrichtung (Verlängerung/ Verkürzung) des Fräsarmes 7 statt, ohne zusätzliche Verschiebung am Pantographenarm, befindet sich die Fräsereinheit 4 nicht im Zentrum des Bearbeitungsbereiches. Dies bewirkt bei Drehung der Arbeitsplatte 10 um die horizontalen Achse 11, dass der Fräser exzentrisch gelagert ist und ein oval gefrästes Objekt entsteht.

Durch die Verschiebung des Pantographen 5 am Pantographenarm wird die Konzentrizität gewährleistet. Dies ist von besonderer Bedeutung bei der Drehung der Arbeitsplatte um die horizontale Achse 11. Ist der Pantograph 5 nicht an der richtigen Position, kommt es zum Versatz, im schlimmsten Fall zur Lochbildung im Werkstück 2. Die Verschiebung der Arbeitsplatte 10 kann gegenüber einem Lagerbock 33 oder aber zusammen mit einem die Arbeitsplatte 10 tragenden Stützfuß 35 erfolgen, wobei auch hier wieder zur exakten Verschiebung ein Maßstab 34 eingesetzt ist.

Bereits kleinste Fehler beim Justieren des Kopierfräsgerätes 1 haben schwerste Auswirkungen, wie Frakturen an den Modellwänden, keine Passung und Deformationen der Werkstücke 2. Bei Drehung um die horizontale Achse 11 und Vorhandensein eines Fehlers kommt es zur Verdoppelung des Fehlers. Um die Positionierung der einzelnen Geräteteile zu vereinfachen und dem Anwendungstechniker eine Sicherheit bei der Einstellung der Geräteparameter zu gewährleisten, ohne Testfräsungen vornehmen zu müssen, ist der Einsatz einer Positionierungshilfe vorteilhaft.

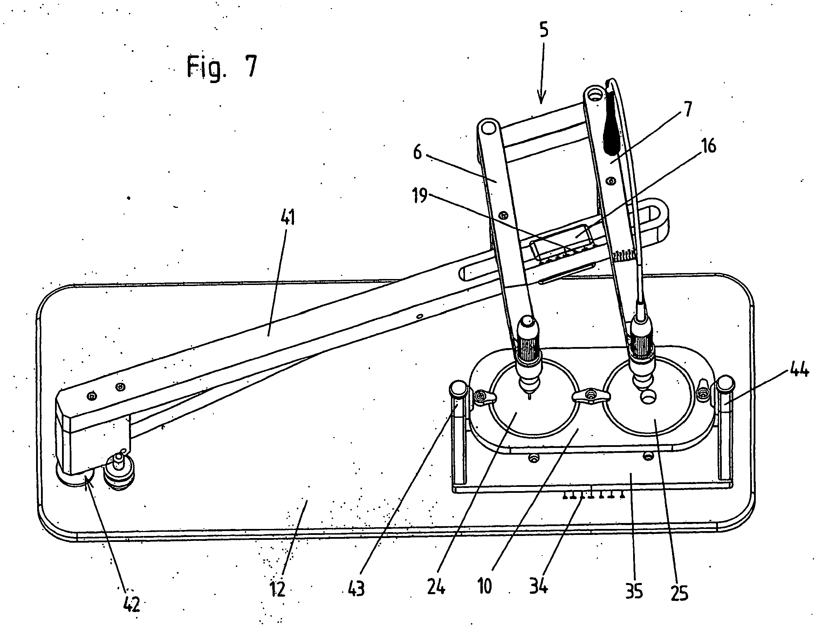

Beim erfindungsgemäßen Kopierfräsgerät 1 soll also der aus Armen 6,7 und Hebeln 8,9 bestehende Pantograph 5 zur Einstellung des Bewegungsradius gegenüber einem Pantographenarm 41 (gemäß der Ausführung nach Fig. 7) verstellbar ausgeführt sein Vorteilhaft ist allerdings, wenn der Pantographenarm als eine Art Schlitten 16 und in dieser Form als Halterung für den Pantographen 5 ausgeführt ist, welcher an einer in einem vorbestimmten Radius verlaufenden Führungsschiene 17 befestigt ist. Die Führungsschiene 17 ist dabei entlang einer von zwei oder mehreren Rollenpaaren 18 gebildeten Führungselementen verschiebbar geführt ist.

Die Ausbildung der Führungsschiene und der Führungselemente kann auf verschiedene Art und Weise erfolgen. Es ist auch denkbar, lediglich drei versetzt zueinander angeordnete Rollen vorzusehen, zwischen denen die Führungsschiene gehalten ist. Es ist auch möglich, am Schlitten 16 wenigstens drei Rollen oder zwei Rollenpaare anzuordnen, welche dann entlang einer feststehenden Führungsschiene verschiebbar sind. Auch die Anordnung von Führungsnuten und in diese eingreifende Stifte sind zur Verschiebung des Pantograph in einem entsprechenden Kreisbogen möglich.

Für die Durchführung von Einstellungen ist die als Schlitten 16 wirkende Halterung des Pantographen 5 quer zur Längserstreckung der Führungsschiene 17 verstellbar gehalten. Es ist dabei ein entsprechender Maßstab 19 vorhanden, um das zu verstellende Maß exakt einhalten zu können.

Durch die Anordnung des Pantographen 5 auf einem Schlitten 16 und durch die Anordnung einer Führungsschiene, welche in dem entsprechenden Radius gebogen ist und auch in diesem Radiusbereich verschiebbar gehalten ist, kann die ganze Anordnung des Kopierfräsgerätes 1 wesentlich verkleinert werden. Es ist nicht mehr die ganze Länge eines Pantographenarmes 41 (wie dies bei der Ausführung nach Fig. 7 vorgesehen ist) und damit dessen Halterung an einem weit entfernt liegenden Drehpunkt 42 erforderlich.

Eine einfache Verbindung des Pantographen 5 mit dem Schlitten 16 sieht vor, dass einer der die Fräseinheit 4 und die Tastereinheit 3 tragenden Arme 6,7 verbindenden Hebel 8 fest und unverschiebbar mit der Halterung, also mit dem Schlitten 16, verbunden ist. Der Schlitten 16 selbst ist dann gegenüber der Führungsschiene 17 verstellbar gehalten.

Die Arbeitsplatte 10 weist zwei Aufnahmebereiche 21,22 für mittels einer Klemmbefestigung 23 fixierbare Spannrahmen 24,25 auf. Am Spannrahmen 24 ist das abzutastende Modell und am Spannrahmen 25 das zu bearbeitende Werkstück 2 festlegbar.

Die große Arbeitsplatte 10 besteht beispielsweise aus einer rostfreien Edelstahlplatte oder aus Aluminium mit abgerundeten Ecken mit zwei in der Mitte befindlichen Aussparungen für die kleineren Spannrahmen (Teller). In den Aussparrungen befinden sich, in einer Höhe von 7 mm, drei Positionierungsstifte für die kleinen Teller, so dass die kleinen Teller spaltfrei und mit der große Arbeitsplatte abschließend eingesetzt werden können. Zur sicheren und verzugfreien Befestigung befinden sich auf der großen Arbeitsplatte 3 Klemmverriegelungen.

Die große Arbeitsplatte 10 dient also zur Aufnahme der tellerartigen Spannrahmen 24,25 und ist um die horizontale Achse 11 um 360° schwenkbar, um das Bearbeiten des Rohlingsmaterials optimal zu gewährleisten. Sie ist auf der Grundplatte 12 befestigt und in Richtung parallel zur Achse 11 verschiebbar gestaltet, um sie den entsprechenden prozentualen Veränderungen anzupassen zu können.

Die Spannrahmen 24,25 besitzen eine kreisrunde Form, man bezeichnet sie auch als Teller. Sie bestehen vorteilhaft aus rostfreiem Edelstahl. Der äußere Durchmesser beträgt bei einer vorteilhaften Ausgestaltung 129 mm und der innere Durchmesser 106 mm. Dazwischen befinden sich, in einer Höhe von 7 mm, Anschlagstege 26 und im Abstand von beispielsweise 30° sind Positionierungsstifte 27 vorhanden.

Die Spannrahmen 24,25 dienen der Aufnahme der modellierten Kunststoffrestauration und des zu fräsenden Werkstückes 2 (z.B. Zirkoniumdioxidrohling). Durch die unterschiedlich großen Aussparungen in der Tellermitte, wird ein Einsetzen von verschiedenen Rohlingsformen und unterschiedlich großen Restaurationsarbeiten ermöglicht. Mittels der Positionierungshilfen am Tellerrand, lassen sich die Spannrahmen 24,25 in horizontaler Ebene um bis zu 360° in der großen Arbeitsplatte 10 drehen.

Gerade bei der erfindungsgemäßen Ausgestaltung ist es ermöglicht, eine einwandfreie Staubabsaugung vornehmen zu können. Die Arbeitsplatte 10 weist zumindest im Aufnahmebereich 22 des zu bearbeitenden Werkstückes 2 oder eben im Bereich des die Werkstücke 2 aufnehmenden Spannrahmens 25 Durchtrittsöffnung 28 auf und unterhalb der Arbeitsplatte 10 ist eine Absaugeinrichtung 29 (oder zumindest ein Absaugtrichter mit einem Absaugschlauch, der zur einer Absauganlage führt) angeordnet. Dabei kann auch eine sinnvolle Ausgestaltung darin liegen, dass das Werkstück 2 in einer Halterung 30 vormontiert, beispielsweise eingeklebt, ist, wobei auch in dieser Halterung zusätzliche Öffnung 31 vorgesehen sein können, die die Absaugmöglichkeit noch verbessern. Außerdem kann auf diese Weise die Montage der Werkstücke 2 im Spannrahmen 25 wesentlich verbessert und vereinfacht werden. Die Werkstücke 2 sind nunmehr in den Spannrahmen 25 einzulegen und dort mittels der Spannelemente 32 zu fixieren. Die Einpassung ist durch die vorgegebene Ausnehmung in dem Spannrahmen und durch die exakt vorgefertigte Halterung 30 gegeben.

Wie schon erwähnt, ist die Arbeitsplatte 10 um die horizontale Achse 11 drehbar gehalten. Bei der vorliegenden Konstruktion ist dabei vorgesehen, bei der Arbeitsplatte 10 im Bereich zwischen den beiden Spannrahmen 24,25 einen Lagerbock 33 anzuordnen. Die Arbeitsplatte 10 ist dadurch um bis zu 360° oder gegebenenfalls auch um einen kleineren Winkel um die Achse 11 verdrehbar ist. Dabei ist die Arbeitsplatte 10 in jeder Winkeleinstellung gegenüber dem Lagerbock feststellbar ist, wobei zu diesem Zweck eine Feineinstellung und auch eine Fixierung in einer bestimmten Winkelstellung über ein Betätigungselement vorgesehen ist. Die beiden Aufnahmebereiche 21,22 der Arbeitsplatte 10 sind über einen Lagerbolzen miteinander fest verbunden, welcher im Lagerbock 33 gehalten ist. Dabei ist es auch möglich, die beiden Aufnahmebereiche 21,22 der Arbeitsplatte 10 ausschließlich über einen Lagerbolzen miteinander zu verbinden, so dass eine weitergehendes Verdrehen der Arbeitsplatte um die Achse 11 möglich ist. Im Rahmen der Erfindung kann die Arbeitsplatte 10 aber auch - wie dies in Fig. 7 gezeigt ist - an zwei seitlich außen vorgesehenen Lagerböcken 43 und 44 gehalten sein. Auch hier ist die Verdrehmöglichkeit unbeschränkt. Es sind dann lediglich zwei nach außen auskragende Lagerbolzen an der Arbeitsplatte 10 vorzusehen. Hier sind dann beide Lagerböcke 43,44 an dem verstellbaren Stützfuß 35 angebracht. Es ist aber auch möglich, zwei Arbeitsplatten 10 getrennt für das Werkstück und für das Modell vorzusehen, wobei diese dann aber voneinander abhängig verstellbar sind.

Mit dem erfindungsgemäßen Kopierfräsgerät sollen insbesondere Werkstücke aus keramischen Werkstoffen für die Dentaltechnik bearbeitet werden. Dabei ist besonders Zirkoniumdioxid vorgesehen. Zirkoniumdioxid dient beim Kopierfräsen als Grundbearbeitungswerkstoff im teilgesinterten Zustand, der so genannte Weißling. Der Werkstoff lässt sich in diesem Zustand leicht ver- und bearbeiten. Das erfindungsgemäße Kopierfräsgerät ist aber auch für den Einsatz im allgemeinen Maschinenbau, in der Kunststofftechnik und in anderen Bearbeitungsbereichen, d.h. also bei der Bearbeitung und somit beim Kopierfräsen oder Kopierschleifen von irgendwelchen Materialien, wie z.B. auch Glaskeramik, Kunststoffe, Composite oder eventuell Legierungen aus diversen Materalien, geeignet.

Das erfindungsgemäße Kopierfräsgerät 1 ist in 5 Achsen beweglich. Dazu gehören in x-Richtung die Bewegung des Tastarmes 6 und des Fräsarmes 7, in y-Richtung die Bewegung des Pantographenarmes, also des Schlitten 16, in z-Richtung wird die Höhe des Tastarmes 6 und Fräsarmes 7 definiert, in die A-Richtung findet eine Drehung senkrecht zur horizontalen Ebene statt (Drehung der großen Arbeitsplatte 10) und in die B-Richtung eine Drehung parallel zur horizontalen Ebene (Drehung der Spannrahmen 24,25).

Ergänzend können bei dem Kopierfräsgerät 1 noch die unmittelbaren Abtast- und Fräsbereiche ausleuchtende Lampen 36 und 37 vorgesehen werden. Um einen Gewichtsausgleich, also eine Art Gleichgewicht beim Pantographen 5 zu erreichen, kann dem Arm 6 oder können beiden Armen 6,7 verstellbare und einstellbare Gewichte zugeordnet werden, welche über ein Verstell- und Verriegelungselement 38 entlang einer schlitzartigen Öffnung 39 verschoben werden können.

### Legende

### zu den Hinweisziffern:

- 1: Kopierfräsgerät
- 2: Werkstück
- 3: Tastereinheit
- 4: Fräseinheit
- 5: Pantograph
- 6: Arm (für Tastereinheit)
- 7: Arm (für Fräseinheit)
- 8: Hebel
- 9: Hebel
- 10: Arbeitsplatte
- 11: horizontale Achse
- 12: Grundplatte
- 13: Abschnitt (des Armes)
- 14: Langloch
- 15: Klemmschraube
- 16: Schlitten
- 17: Führungsschiene
- 18: Rollenpaar
- 19: Maßstab
- 20: Verstelleinrichtung
- 21: Aufnahmebereich (der Arbeitsplatte)
- 22: Aufnahmebereich (der Arbeitsplatte)
- 23: Klemmbefestigung
- 24: Spannrahmen (modellseitig)
- 25: Spannrahmen (werkstückseitig)
- 26: Anschlagsteg
- 27: Positionsstifte
- 28: Durchtrittsöffnungen
- 29: Absaugeinrichtung
- 30: Halterung
- 31: Öffnungen
- 32: Spannelement
- 33: Lagerbock
- 34: Maßstab
- 35: Stützfuß
- 36: Lampe
- 37: Lampe
- 38: Verstell- und

### Verriegelungselement

- 39: schlitzartige Öffnung
- 40: Öffnung
- 41: Pantographenarm
- 42: Drehpunkt
- 43: Lagerbock
- 44: Lagerbock

## Patentansprüche

1. Kopierfräsgerät (1) zur Bearbeitung von Werkstücken (2) aus keramischen Werkstoffen, wobei eine Tastereinheit (3) einem abzutastenden Modell und eine Fräseinheit (4) dem zu bearbeitenden Werkstück (2) zugeordnet sind, und wobei Tastereinheit (3) und Fräseinheit (4) nach Art eines Pantographen miteinander in Wirkverbindung stehen, wobei an den gleich gerichteten Enden von zwei annähernd parallel zueinander ausgerichteten Armen (6,7) des Pantographen (5) einerseits die Tastereinheit (3) und andererseits die Fräseinheit (4) angeordnet sind, **dadurch gekennzeichnet, dass** die den Pantographen (5) bildenden Arme (6,7) und Hebel (8,9) zur Veränderung des Verkleinerungs- oder Vergrößerungsfaktors zumindest teilweise in ihrer Länge und der Bewegungsradius des Pantographen (5) verstellbar sind und dass eine Arbeitsplatte (10) zur Aufnahme des Modells und des zu bearbeitenden Werkstückes (2) verdrehbar gehalten ist.

2. Kopierfräsgerät (1) nach Anspruch 1, **dadurch gekennzeichnet, dass** ein Abschnitt (13) des die Fräseinheit (4) tragenden Armes (7) verlängerbar oder verkürzbar ist.

3. Kopierfräsgerät (1) nach Anspruch 2, **dadurch gekennzeichnet, dass** der verstellbare Abschnitt (13) des die Fräseinheit (4) tragenden Armes (7) gegenüber dem Arm (7) feststellbar ist.

4. Kopierfräsgerät (1) nach den Ansprüchen 3 und 4, **dadurch gekennzeichnet, dass** der verstellbare Abschnitt (13) des die Fräseinheit (4) tragenden Armes (7) ein Langloch (14) aufweist, in welches eine in den Arm eindrehbare Klemmschraube (15) eingreift.

5. Kopierfräsgerät (1) nach Anspruch 1, **dadurch gekennzeichnet, dass** der aus Armen (6,7) und Hebeln (8,9) bestehende Pantograph (5) zur Einstellung des Bewegungsradius gegenüber einem Pantographenarm verstellbar ausgeführt ist.

6. Kopierfräsgerät (1) nach Anspruch 5, **dadurch gekennzeichnet, dass** der Pantographenarm als Halterung für den Pantographen (5) ausgeführt ist, welcher an einer in einem vorbestimmten Radius verlaufenden Führungsschiene (17) befestigt ist.

7. Kopierfräsgerät (1) nach Anspruch 6, **dadurch gekennzeichnet, dass** die Führungsschiene (17) entlang von, von zwei oder mehreren Rollenpaaren (18) oder wenigstens drei versetzt zueinander angeordneten Rollen gebildeten, Führungselementen verschiebbar geführt ist.

8. Kopierfräsgerät (1) nach den Ansprüchen 6 und 7, **dadurch gekennzeichnet, dass** die Halterung des Pantographen (5) quer zur Längserstreckung der Führungsschiene (17) verstellbar gehalten ist.

9. Kopierfräsgerät (1) nach den Ansprüchen 6 bis 8, **dadurch gekennzeichnet, dass** einer der, die, die Fräseinheit (4) und die Tastereinheit (3) tragenden, Arme (6,7) verbindenden, Hebel (8) fest und unverschiebbar mit der Halterung verbunden ist und die Halterung gegenüber der Führungsschiene (17) verstellbar gehalten ist.

10. Kopierfräsgerät (1) nach Anspruch 1 und einem der vorstehenden Ansprüche, **dadurch gekennzeichnet, dass** die Arbeitsplatte (10) zwei Aufnahmebereiche (21,22) für mittels einer Klemmbefestigung (23) fixierbare Spannrahmen (24,25) aufweist, an welchen einerseits das abzutastende Modell und andererseits das zu bearbeitende Werkstück (2) festlegbar sind.

11. Kopierfräsgerät (1) nach Anspruch 10, **dadurch gekennzeichnet, dass** die Spannrahmen (24,25) und die diese aufnehmenden Öffnungen (40) in der Arbeitsplatte (10) kreisförmig ausgeführt sind, so dass die Spannrahmen (24,25) in deren Ebene bei gelöster Klemmbefestigung (23) um bis zu 360° verdrehbar sind.

12. Kopierfräsgerät (1) nach den Ansprüchen 10 und 11, **dadurch gekennzeichnet, dass** die Arbeitsplatte (10) zumindest im Aufnahmebereich des zu bearbeitenden Werkstückes (2) oder eben im Bereich des die Werkstücke (2) aufnehmenden Spannrahmens (25) eine Durchtrittsöffnung (28) aufweist und dass unterhalb der Arbeitsplatte (10) eine Absaugeinrichtung (29) angeordnet ist.

13. Kopierfräsgerät (1) nach den Ansprüchen 1, 11 und 12, **dadurch gekennzeichnet, dass** die Arbeitsplatte (10) im Bereich zwischen den beiden Spannrahmen (24,25) an einem Lagerbock (33) angeordnet ist, um dessen horizontale Achse (11) die Arbeitsplatte (10) um bis zu 360° verdrehbar ist

14. Kopierfräsgerät (1) nach den Ansprüchen 1 und 13, **dadurch gekennzeichnet, dass** die Arbeitsplatte (10) in jeder Winkeleinstellung gegenüber dem Lagerbock (33) feststellbar ist.

15. Kopierfräsgerät (1) nach den Ansprüchen 13 und 14, **dadurch gekennzeichnet, dass** die beiden Aufnahmebereiche (21,22) der Arbeitsplatte (10) über einen Lagerbolzen miteinander fest verbunden sind, welcher im Lagerbock (33) gehalten ist.

## Claims

1. A copy milling apparatus (1) for machining workpieces (2) made of ceramic materials, wherein a tracer unit (3) is associated with a model which is to be traced and a milling unit (4) is associated with the workpiece (2) which is to be machined, and wherein the tracer unit (3) and milling unit (4) are in an operative connection with one another in the manner of a pantograph, wherein the tracer unit (3) on the one hand and the milling unit (4) on the other hand are arranged on the identically oriented ends of two arms (6, 7) of the pantograph (5) which are oriented approximately parallel to one another, **characterised in that** the arms (6, 7) and levers (8, 9) forming the pantograph (5) in order to change the reduction or enlargement factor are adjustable at least partially in their length and the radius of movement of the pantograph (5) is adjustable, and **in that** a work plate (10) for receiving the model and the workpiece (2) to be machined is held so that it can be twisted.

2. A copy milling apparatus (1) according to Claim 1, **characterised in that** a section (13) of the arm (7) bearing the milling unit (4) can be lengthened or shortened.

3. A copy milling apparatus (1) according to Claim 2, **characterised in that** the adjustable section (13) of the arm (7) bearing the milling unit (4) can be fixed with respect to the arm (7).

4. A copy milling apparatus (1) according to Claims 3 and 4, **characterised in that** the adjustable section (13) of the arm (7) bearing the milling unit (4) has an elongate hole (14) in which a locking screw (15) which can be screwed into the arm engages.

5. A copy milling apparatus (1) according to Claim 1, **characterised in that** to adjust the radius of movement, the pantograph (5) consisting of arms (6, 7) and levers (8, 9) is designed to be adjustable with respect to a pantograph arm.

6. A copy milling apparatus (1) according to Claim 5, **characterised in that** the pantograph arm is designed as a holding means for the pantograph (5) which is fastened to a guide rail (17) which extends in a predetermined radius.

7. A copy milling apparatus (1) according to Claim 6, **characterised in that** the guide rail (17) is displaceably guided along guide elements formed by two or more pairs of rollers (18) or at least three rollers arranged offset relative to one another.

8. A copy milling apparatus (1) according to Claims 6 and 7, **characterised in that** the holding means for the pantograph (5) is held adjustably transversely to the longitudinal extent of the guide rail (17).

9. A copy milling apparatus (1) according to Claims 6 to 8, **characterised in that** one of the levers (8) connecting the arms (6, 7) bearing the milling unit (4) and the tracer unit (3) is connected securely and non-displaceably with the holding means and the holding means is held adjustably relative to the guide rail (17).

10. A copy milling apparatus (1) according to Claim 1 and one of the above claims, **characterised in that** the work plate (10) has two receiving regions (21, 22) for clamping frames (24, 25) which can be fixed by means of a clamping fastening means (23), on which frames can be secured on one hand the model which is to be traced and on the other hand the workpiece (2) which is to be machined.

11. A copy milling apparatus (1) according to Claim 10, **characterised in that** the clamping frames (24, 25) and the openings (40) in the work plate (10) which receive them are made circular, so that the clamping frames (24, 25) can be twisted by up to 360° in their plane when the clamping fastening means (23) has been released.

12. A copy milling apparatus (1) according to Claims 10 and 11, **characterised in that** the work plate (10) at least in the receiving region of the workpiece (2) which is to be machined or just in the region of the clamping frame (25) receiving the workpieces (2) has a passage opening (28) and that an extraction means (29) is arranged beneath the work plate (10).

13. A copy milling apparatus (1) according to Claims 1, 11 and 12, **characterised in that** the work plate (10) is arranged on a pedestal (33) in the region between the two clamping frames (24, 25), about the horizontal axis (11) of which pedestal the work plate (10) can be twisted by up to 360°.

14. A copy milling apparatus (1) according to Claims 1 and 13, **characterised in that** the work plate (10) can be fixed in any angular setting relative to the pedestal (33).

15. A copy milling apparatus (1) according to Claims 13 and 14, **characterised in that** the two receiving regions (21, 22) of the work plate (10) are connected securely together via a bearing pin which is held in the pedestal (33).

## Revendications

1. Fraiseuse à copier (1) pour usiner des pièces (2) en matière céramique comportant :
- une unité de détection (3) pour détecter un modèle,
- une unité de fraisage (4) pour usiner la pièce (2), et
l'unité de détection (3) et l'unité de fraisage (4) coopèrent à la manière d'un pantographe,
les extrémités du même côté de deux bras (7), sensiblement parallèles du pantographe (5) portent d'une part, l'unité de détection (3) et d'autre part, l'unité de fraisage (4),
**caractérisée en ce que**
les bras (6, 7) et les leviers (8, 9) formant le pantographe (5) sont réglables au moins en partie pour leur longueur et rayon de déplacement du pantographe (5) afin de modifier le coefficient de réduction ou d'agrandissement, et
un plateau de travail (10) recevant le modèle et la pièce à usiner (2) est tenu de façon à pouvoir tourner.

2. Fraiseuse à copier (1) selon la revendication 1,
**caractérisée en ce qu'**
un segment (13) du bras (7) portant l'unité de fraisage (4) peut être allongé ou raccourci.

3. Fraiseuse à copier (1) selon la revendication 2,
**caractérisée en ce que**
le segment réglable (13) du bras (7) portant l'unité de fraisage (4) est susceptible d'être bloqué par rapport au bras (7).

4. Fraiseuse à copier (1) selon les revendications 3 et 4,
**caractérisée en ce que**
le segment réglable (13) du bras (7) portant l'unité de fraisage (4) comporte un trou oblong (14) dans lequel pénètre une vis de serrage (15) qui se visse dans le bras.

5. Fraiseuse à copier (1) selon la revendication 1,
**caractérisée en ce que**
le pantographe (5) formé des bras (6, 7) et des leviers (8, 9) est réalisé pour régler le rayon de déplacement par rapport à un bras du pantographe.

6. Fraiseuse à copier (1) selon la revendication 5,
**caractérisée en ce que**
le bras de pantographe est réalisé comme support du pantographe (5) et des rails de guidage (17) sont fixés selon un rayon prédéfini.

7. Fraiseuse à copier (1) selon la revendication 6,
**caractérisée en ce que**
les rails de guidage (17) sont guidés de façon à coulisser le long de l'une des deux ou plusieurs paires de galets (18) ou au moins trois éléments de guidage formés par des galets décalés les uns par rapport aux autres.

8. Fraiseuse à copier (1) selon les revendications 6 et 7,
**caractérisée en ce que**
la fixation du pantographe (5) est réglable transversalement à l'extension longitudinale des rails de guidage (17).

9. Fraiseuse à copier (1) selon les revendications 6 à 8,
**caractérisée en ce qu'**
un levier (8) reliant les bras (6, 7) portant l'unité de fraisage (4) et l'unité de détection (3) est relié solidairement et de manière non coulissante au support et ce dernier est tenu de manière réglable par rapport au rail de guidage (17).

10. Fraiseuse à copier (1) selon la revendication 1 et l'une des revendications précédentes,
**caractérisée en ce que**
le plateau de travail (10) comporte deux zones de réception (21, 22) pour des châssis de serrage (24, 25) bloqués par l'intermédiaire d'un moyen de fixation par serrage (23), et sur ces châssis de serrage on fixe d'une part le modèle à détecter et d'autre part la pièce (2) à usiner.

11. Fraiseuse à copier (1) selon la revendication 10,
**caractérisée en ce que**
les châssis de serrage (24, 25) et les ouvertures (40) du plateau de travail (10) qui les reçoivent, ont une forme circulaire de sorte que les vis de serrage (24, 25) peuvent tourner jusqu'à 360°, dans leur plan, lorsque la fixation avec serrage (23) est ouverte.

12. Fraiseuse à copier (1) selon les revendications 10 et 11,
**caractérisée en ce que**
le plateau de travail (10) comporte un orifice de passage (28) au moins dans la zone de réception de la pièce (2) à usiner ou dans la zone du châssis de serrage (25) recevant la pièce (2) et sous le plateau de travail (10) est prévue une installation d'aspiration (29).

13. Fraiseuse à copier (1) selon les revendications 1, 11 et 12,
**caractérisée en ce que**
le plateau (10) est monté sur un bloc de palier (33) dans la zone comprise entre les deux châssis de serrage (24, 25) et le plateau (10) peut tourner jusqu'à 360° autour d'un axe horizontal (11).

14. Fraiseuse à copier (1) selon les revendications 1 et 13,
**caractérisée en ce que**
le plateau (10) se fixe dans chaque position angulaire par rapport au bloc de palier (33).

15. Fraiseuse à copier (1) selon les revendications 13 et 14,
**caractérisée en ce que**
les deux zones de réception (21, 22) du plateau (10) sont tenues reliées solidairement l'une à l'autre par l'intermédiaire d'un goujon de palier tenu dans un bloc de palier.
